# EUROPÄISCHE PATENTSCHRIFT

(11) **EP 3 519 634 B1**
(45) Veröffentlichungstag und Bekanntmachung des Hinweises auf die Patenterteilung: **04.11.2020**
(21) Anmeldenummer: 17780369.9
(22) Anmeldetag: 29.09.2017
(51) Int. Cl.: E02B 17/02, B66C 1/10, E02B 17/00, F03D 13/25, B66C 23/20, F03D 80/00

(54) **OFFSHORE-WINDENERGIEANLAGE**
OFFSHORE WIND TURBINE
ÉOLIENNE EN MER

(30) Priorität: 30.09.2016 DE 102016219087
(43) Veröffentlichungstag der Anmeldung: 07.08.2019
(73) Patentinhaber: Innogy SE, 45128 Essen (DE)
(72) Erfinder: BARTMINN, Daniel, 25335 Elmshorn (DE); WEBER, Jörg Johannes, 18311 Ribnitz-Damgarten (DE); ZIPFEL, Bernadette, 21109 Hamburg (DE); HEINRICH, Oliver, 22455 Hamburg (DE)
(74) Vertreter: Richly & Ritschel Patentanwälte PartG mbB
(86) Internationale Anmeldenummer: PCT/EP2017/074833
(87) Internationale Veröffentlichungsnummer: WO 2018/060455

(56) Entgegenhaltungen:
- DE-A1-102007 020 483

## Beschreibung

Die Erfindung betrifft eine auf Offshore-Windenergieanlage.

Aus Dokument DE102007020483 ist eine Offshore-Windenergieanlage mit den Merkmalen des Oberbegriffs von Anspruch 1 bekannt.

Offshore-Windenergieanlagen haben üblicherweise eine außenliegende Arbeitsplattform, die über ebenfalls außenliegende Zugangsleitern und Zwischenplattformen erreicht werden kann. Sowohl die Arbeitsplattform als auch die Zugangsleitern und Zwischenplattformen sind daher umfangsseitig an einem Turm oder einem Übergangsstück der Offshore-Windenergieanlage befestigt. Die außenliegende Arbeitsplattform ist meist oberhalb der 50-Jahres-Wellenhöhe angeordnet, d.h. in Nord- oder Ostsee beispielsweise ca. 15 m bis 20 m über dem niedrigsten Gezeitenwasserstand "NGzW", auch bekannt unter der Abkürzung "LAT" für "Lowest Astronomical Tide". Eine Zugangsöffnung im Bereich der Arbeitsplattform ermöglicht den Personenzugang zum Turminneren.

Die außenliegende, oberhalb der 50-Jahres-Wellenhöhe angeordnete Arbeitsplattform, die Zugangsleitern und die Zwischenplattformen beeinflussen sowohl die Bauhöhe der Offshore-Windenergieanlage als auch die Dimensionierung der Turm- und Gründungsstruktur. So muss der untere Durchgang der Rotorblattspitzen des Rotors der Offshore-Windenergieanlage oberhalb der Arbeitsplattform und der sich darauf befindenden Auf- und Anbauten angeordnet sein, wie Arbeitskränen, Freigängen oder dergleichen. Die Höhe der außenliegenden Arbeitsplattform bestimmt daher mittelbar auch die Nabenhöhe des Rotors. Weiter verursachen die Zugangsleitern und Zwischenplattformen einen erheblichen Wellenwiderstand.

Der Erfindung liegt daher die technische Problemstellung zugrunde, eine verbesserte Offshore-Windenergieanlage anzugeben, welche die voranstehend beschriebenen Nachteile nicht oder zumindest in geringerem Maße aufweist und insbesondere eine geringere Bauhöhe ermöglicht.

Die voranstehend beschriebene technische Problemstellung wird gelöst durch eine Offshore-Windenergieanlage nach Anspruch 1. Weitere Ausgestaltungen der Erfindung ergeben sich aus den abhängigen Ansprüchen und der nachstehenden Beschreibung.

Die Erfindung betrifft eine Offshore-Windenergieanlage, mit einer Tragstruktur, mit einer Gondel, mit einem Rotor, mit einem Innenraum, mit wenigstens einer Zugangsöffnung und mit einem Aufstieg, wie einer Leiter, einer Treppe oder dergleichen, wobei die Tragstruktur einen Turm und eine Gründungsstruktur aufweist, wobei der Turm die Gondel und den Rotor trägt, wobei die Zugangsöffnung als Personenzugang zu dem Innenraum ausgestaltet ist, wobei der Aufstieg im Innenraum angeordnet ist, wobei der Aufstieg der Zugangsöffnung zugeordnet ist und wobei entlang einer Höhenerstreckung der Tragstruktur betrachtet zwischen der Gründungsstruktur und der Zugangsöffnung keine außenliegende Arbeitsplattform angeordnet ist.

Durch den innenliegenden Aufstieg kann der Wellenwiderstand im Vergleich zu einer außenliegenden Anordnung verringert werden. Der innenliegende Aufstieg muss nicht für Wellenlasten ausgelegt werden. Die Gründungsstruktur kann für geringere Lasten ausgelegt und kompakter dimensioniert werden.

Durch den Entfall einer außenliegenden Arbeitsplattform unterhalb der Zugangsöffnung kann die Gesamthöhe der Offshore-Windenergieanlage insgesamt reduziert werden, da Rotor und Nabe im fertig montierten Zustand der Windenergieanlage niedriger, also unter geringerem Abstand zum Wasserspiegel, angeordnet werden können.

Wenn vorliegend von einer Arbeitsplattform gesprochen wird, so handelt es sich dabei insbesondere um eine Service-Plattform, die zum Verladen von sogenannten "BigBags", Containern mit Werkzeug oder Servicegeräten von einem Serviceboot zur Windenergieanlage vorgesehen ist. Weiter können über die Arbeitsplattform auch größere Ersatzteile oder Komponenten der Windkraftanlage bereitgestellt werden, beispielsweise während des Aufbaus, des Betriebs oder der Wartung.

"Keine außenliegende Arbeitsplattform" bedeutet hier, dass keine Arbeitsplattform umfangsseitig an der Tragstruktur angeordnet ist. Insbesondere ist keine Arbeitsplattform an einer von dem Innenraum abgewandten Außenfläche der Tragstruktur, d.h. an einer von dem Innenraum abgewandten, äußeren Mantelfläche der Tragstruktur angeordnet.

Insbesondere ist entlang einer Höhenerstreckung der Tragstruktur betrachtet zwischen der Gründungsstruktur und der Zugangsöffnung keine Arbeitsplattform angeordnet, die eine Hebeeinrichtung, wie einen Kran oder dergleichen, und/oder einen Freigang aufweist.

Insbesondere ist entlang einer Höhenerstreckung der Tragstruktur betrachtet zwischen der Gründungsstruktur und der Zugangsöffnung keine Arbeitsplattform angeordnet, die eine Hebeeinrichtung, wie einen Kran oder dergleichen, und/oder einen Freigang aufweist, wobei der Freigang den Turm umfangsseitig umschließt, umrundet oder einfasst.

Wenn vorliegend von einer Höhenerstreckung der Tragstruktur gesprochen wird, so ist die Höhenerstreckung im fertig montierten Zustand der Windenergieanalage im Wesentlichen parallel zur Vertikalen erstreckt.

Bei der Gründungsstruktur kann es sich um eine der Bauformen "Monopile", "Tripod", "Jacket", "Saugpfahl" oder "Schwergewichtsgründung" handeln.

Es können zwei oder mehr Zugangsöffnungen vorgesehen sein.

Die zwei oder mehr Zugangsöffnungen können entlang einer Höhenerstreckung der Tragstruktur betrachtet unter einem Abstand zueinander angeordnet sein.

Die zwei oder mehr Zugangsöffnungen können an der Tragstruktur umfangsseitig unter einem Winkelabstand zueinander angeordnet sein.

Erfindungsgemäß weist die Offshore-Windenergieanlage eine Hebeeinrichtung und eine Ladeöffnung auf, wobei die Hebeeinrichtung und die Ladeöffnung entlang der Höhenerstreckung betrachtet zwischen der Zugangsöffnung und der Gondel angeordnet sind, wobei die Hebeeinrichtung der Ladeöffnung zugeordnet ist, wobei die Hebeeinrichtung aus einer ersten in eine zweite Position bewegbar ist, wobei die Hebeeinrichtung in der ersten Position vollständig im Innenraum aufgenommen ist. Nach einer weiteren Ausgestaltung ist die Hebeeinrichtung in der zweiten Position im Bereich der Ladeöffnung zumindest abschnittsweise über eine äußere Mantelfläche der Tragstruktur auskragend erstreckt ist. Die Hebeeinrichtung kann so vor Witterung geschützt werden.

"Bewegbar" bedeutet vorliegend, dass die Hebeeinrichtung ausfahrbar, schwenkbar, verschiebbar oder ausklappbar sein kann. Die Hebeeinrichtung kann ein Kran sein. Die Hebeeinrichtung kann eine Seilwinde oder eine Kranwinde aufweisen.

Die Hebeeinrichtung kann einen oder mehrere bewegliche Träger, wie Stahlträger, Stahlprofile oder dergleichen, aufweisen, die mit einem oder mehreren Gelenken und/oder mit einer oder mehreren Führungsschienen an der Tragstruktur befestigt sind.

Erfindungsgemäß ist die Hebeeinrichtung in der ersten Position vollständig im Innenraum aufgenommen, so dass die Hebeeinrichtung vor Witterung geschützt werden kann.

Der Aufstieg kann ausgehend von der Zugangsöffnung bis hin zur Gondel vollständig im Turminnenraum angeordnet sein.

Gemäß einer weiteren Ausgestaltung der Offshore-Windenergieanlage ist vorgesehen, dass die Hebeeinrichtung eine Laufkatze und einen Kragbalken aufweist, wobei die Laufkatze insbesondere zum Anschlagen eines Hebezeugs und/oder von Lasten vorgesehen und entlang des Kragbalkens verschiebbar ist, und wobei der Kragbalken insbesondere zumindest abschnittsweise aus dem Innenraum bewegbar ist, sodass der Kragbalken zumindest abschnittsweise über eine äußere Mantelfläche der Tragstruktur auskragend erstreckt ist. So kann die Hebeeinrichtung in kostengünstiger und kompakter Bauweise realisiert werden. Die Laufkatze kann eine Seilwinde oder eine Kranwinde zum Heben von Lasten aufweisen.

Nach einer weiteren Ausgestaltung der Offshore-Windenergieanlage ist die Ladeöffnung mit einer Klappe verschließbar. Der Innenraum kann so vor Witterungseinflüssen geschützt werden. Die Klappe kann nach außen verschwenkbar an dem Turm befestigt sein, sodass die Klappe in einer Offenstellung eine über eine äußere Mantelfläche der Tragstruktur auskragende Ladeplattform bildet. Die Ladeplattform kann als Service-Plattform oder Arbeitsplattform dienen, die zum Verladen von "BigBags", Containern mit Werkzeug oder Servicegeräten von einem Serviceboot zur Offshore-Windenergieanlage vorgesehen ist.

Es kann vorgesehen sein, dass die Hebeeinrichtung im fertig montierten Zustand der Offshore-Windenergieanlage entlang der Höhenerstreckung der Tragstruktur betrachtet in einer Höhe von 5 m bis 10 m über dem niedrigsten Gezeitenwasserstand angeordnet ist. Durch die vergleichsweise niedrige Anordnung der Hebeeinrichtung kann ein zügiges Verladen von "BigBags", Containern mit Werkzeug oder Servicegeräten von einem Serviceboot zur Windenergieanlage erfolgen.

Der Zugangsöffnung kann eine gegenüber der Zugangsöffnung in den Innenraum nach innen zurück versetzte Prallplatte zugeordnet sein. Diese kann dazu vorgesehen sein, die Energie eintretender Wellen zumindest teilweise aufzunehmen, um eine Innenwandung der Tragstruktur oder innenliegende Leitungen oder Kabelstränge zu schützen.

Der Zugangsöffnung kann ein Absatz oder Tritt zugeordnet sein, der über eine außenliegende Leiter erreichbar ist und den Personenzugang erleichtert. Der Absatz oder Tritt kann außenliegend angeordnet sein.

Es kann eine Tür zum Öffnen und Verschließen der Zugangsöffnung vorgesehen sein, um den Innenraum vor Witterungseinflüssen zu schützen.

Nach einer weiteren Ausgestaltung der Offshore-Windenergieanlage ist vorgesehen, dass die Zugangsöffnung im fertig montierten Zustand der Offshore-Windenergieanlage entlang der Höhenerstreckung der Tragstruktur betrachtet 15 m oder weniger oberhalb des niedrigsten Gezeitenwasserstand angeordnet ist. So kann ein komfortabler Zugang zum Innenraum bereitgestellt werden.

Nach einer weiteren Ausgestaltung der Offshore-Windenergieanlage kann vorgesehen sein, dass entlang der Höhenerstreckung der Tragstruktur betrachtet keine außenliegende Arbeitsplattform in einer Höhe von 15 m oder mehr oberhalb des niedrigsten Gezeitenwasserstands und unterhalb eines unteren Rotordurchgangs des Rotors angeordnet ist. Durch den Wegfall einer außenliegenden Arbeitsplattform in diesem Bereich kann die Bauhöhe der Offshore-Windenergieanlage insgesamt reduziert werden. So kann der untere Durchgang von Rotorblattspitzen des Rotors niedriger angeordnet werden und ist nicht durch die Anordnung einer außenliegenden Arbeitsplattform vorgegeben.

Der Aufstieg kann im fertig montierten Zustand der Offshore-Windenergieanlage entlang der Höhenerstreckung der Tragstruktur betrachtet zumindest abschnittsweise 15 m oder weniger oberhalb des niedrigsten Gezeitenwasserstands angeordnet sein. Der im Innenraum angeordnete Aufstieg ermöglicht einen komfortablen Personenzugang zu höhergelegenen Turmbereichen ohne der Witterung ausgesetzt zu sein.

Es kann vorgesehen sein, dass entlang der Höhenerstreckung der Tragstruktur betrachtet zwischen der Zugangsöffnung und der Ladeöffnung kein außenliegender Aufstieg, wie eine Leiter, eine Treppe oder dergleichen, angeordnet ist, um den Wellenwiderstand zu reduzieren. Mit anderen Worten kann ein Aufstieg zwischen der Zugangsöffnung und der Ladeöffnung ausschließlich im Innenraum angeordnet sein.

Nach einer weiteren Ausgestaltung der Offshore-Windenergieanlage ist vorgesehen, dass die Zugangsöffnung im fertig montierten Zustand der Offshore-Windenergieanlage entlang der Höhenerstreckung der Tragstruktur betrachtet betrachtet 5 m oder mehr zu einem unteren Durchgang von Rotorspitzen des Rotors beabstandet ist.

Nach einer weiteren Ausgestaltung der Offshore-Windenergieanlage ist vorgesehen, dass die Zugangsöffnung im fertig montierten Zustand der Offshore-Windenergieanlage entlang der Höhenerstreckung der Tragstruktur betrachtet 10 m oder weniger oberhalb des niedrigsten Gezeitenwasserstand angeordnet ist, insbesondere 5 m oder weniger oberhalb des niedrigsten Gezeitenwasserstand angeordnet ist. Dieser Abstand bezieht sich insbesondere auf den Abstand einer Unterkante der Zugangsöffnung zu dem niedrigsten Gezeitenwasserstand.

Nach einer weiteren Ausgestaltung der Offshore-Windenergieanlage ist vorgesehen, dass der Aufstieg im fertig montierten Zustand der Offshore-Windenergieanlage entlang der Höhenerstreckung der Tragstruktur betrachtet zumindest abschnittsweise 10 m oder weniger oberhalb des niedrigsten Gezeitenwasserstands angeordnet ist, insbesondere 5 m oder weniger oberhalb des niedrigsten Gezeitenwasserstand angeordnet ist.

Nach einer weiteren Ausgestaltung der Offshore-Windenergieanlage ist vorgesehen, dass die Zugangsöffnung im fertig montierten Zustand der Offshore-Windenergieanlage entlang der Höhenerstreckung der Tragstruktur betrachtet 10 m oder mehr zu einem unteren Durchgang von Rotorspitzen des Rotors beabstandet ist, insbesondere 15 m oder mehr zu einem unteren Durchgang von Rotorspitzen des Rotors beabstandet ist. So kann ein komfortabler Zugang zum Innenraum bereitgestellt werden. Nach einer weiteren Ausgestaltung weist die Tragstruktur der Offshore-Windenergieanlage ein Übergangsstück auf, wobei das Übergangsstück entlang der Höhenerstreckung der Tragstruktur betrachtet zwischen dem Turm und der Gründungsstruktur angeordnet ist, wobei das Übergangsstück die Gründungsstruktur mit dem Turm verbindet und wobei die Zugangsöffnung an dem Übergangsstück vorgesehen ist.

Nachfolgend wird die Erfindung anhand einer Ausführungsbeispiele darstellenden Zeichnung näher beschrieben. Es zeigen jeweils schematisch:
- Fig. 1: eine erfindungsgemäße Offshore-Windenergieanlage;
- Fig. 2: eine weitere erfindungsgemäße Offshore-Windenergieanlage;
- Fig. 3: einen Teil einer Tragstruktur der Windenergieanlage aus Fig. 2 in einer perspektivischen Ansicht;
- Fig. 4: den Teil einer Tragstruktur der Windenergieanlage aus Fig. 3 in einem Längsschnitt;
- Fig. 5: den Teil der Tragstruktur aus Fig. 3 einer Draufsicht;
- Fig. 6: den Teil der Tragstruktur aus Fig. 3 in einer Schnittdarstellung.

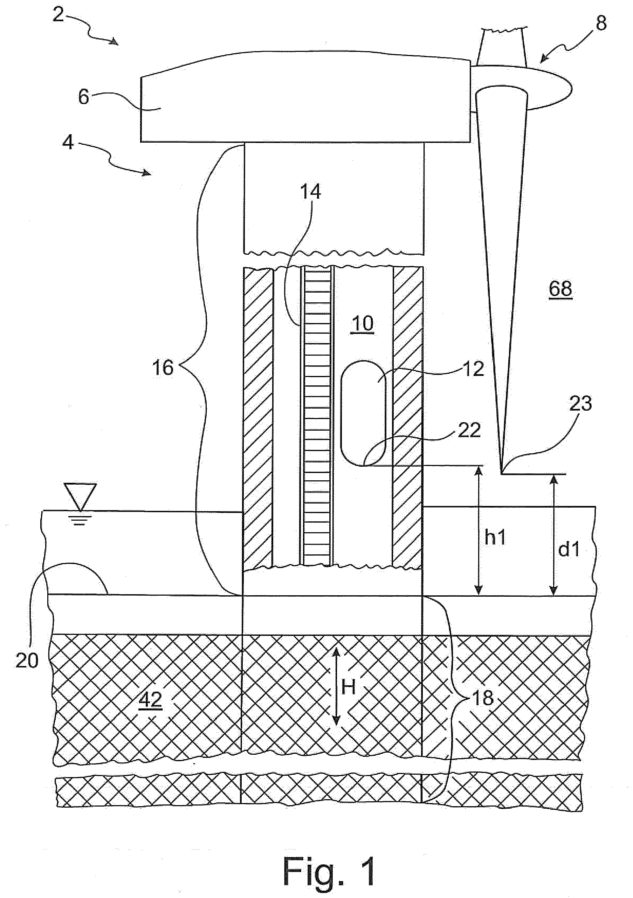

Fig. 1 zeigt eine Offshore-Windenergieanlage 2. Die Offshore-Windenergieanlage 2 hat eine Tragstruktur 4, eine Gondel 6, einen Rotor 8, einen Innenraum 10 und eine Zugangsöffnung 12. Weiter hat Offshore-Windenergieanlage 2 einen Aufstieg 14. Der Aufstieg 14 ist eine Leiter 14.

Die Tragstruktur 4 weist einen Turm 16 und eine Gründungsstruktur 18 auf. Der Turm 16 trägt die Gondel 6 und den Rotor 8. Die Zugangsöffnung 12 ist als Personenzugang zu dem Innenraum 10 ausgestaltet. Der Aufstieg 14 ist im Innenraum 10 angeordnet. Der Aufstieg 14 ist der Zugangsöffnung 12 zugeordnet. Eine oder mehrere Personen können über die Zugangsöffnung 12 den Aufstieg 14 betreten.

Entlang einer Höhenerstreckung H der Tragstruktur 4 betrachtet ist zwischen der Gründungsstruktur 18 und der Zugangsöffnung 12 keine außenliegende Arbeitsplattform angeordnet. Die Gründungsstruktur ist vorliegend als Monopile ausgestaltet.

In dem hier dargestellten, fertig montierten Zustand der Offshore-Windenergieanlage 2 ist die Zugangsöffnung 12 entlang der Höhenerstreckung H der Tragstruktur 4 betrachtet weniger als 15 m oberhalb des niedrigsten Gezeitenwasserstands 20 angeordnet. Der entlang der Höhenerstreckung H der Tragstruktur 4 gemessene Abstand h1 zwischen der Unterkante 22 der Zugangsöffnung 12 und dem niedrigsten Gezeitenwasserstand 20 ist daher vorliegend kleiner als 15 m.

Wie weiter aus Fig. 1 zu entnehmen, der Aufstieg 14 nicht nur oberhalb der Zugangsöffnung 12 erstreckt, sondern ist im fertig montierten Zustand der Offshore Windenergieanlage 2 entlang der Höhenerstreckung H der Tragstruktur 4 betrachtet zumindest abschnittsweise 15 m oder weniger oberhalb des niedrigsten Gezeitenwasserstands 12 angeordnet. Mit anderen Worten erstreckt sich der Aufstieg 14 auch zwischen der Unterkante 22 der Zugangsöffnung 12 und dem niedrigsten Gezeitenwasserstand 20. Vorliegend erstreckt sich der Aufstieg 14 im Innenraum 10 bis in die Gründungsstruktur 18.

In Fig. 1 ist der Turm 16 durch einen unterbrochenen Schnitt entlang der Höhenerstreckung H verkürzt dargestellt. Es versteht sich, dass der untere Durchgang der Rotorspitze 23 einen größeren Abstand d1 zum niedrigsten Gezeitenwasserstand 20 aufweist, als die Unterkante 22 der Zugangsöffnung 12. Der Abstand d1 ist daher größer als der Abstand h1.

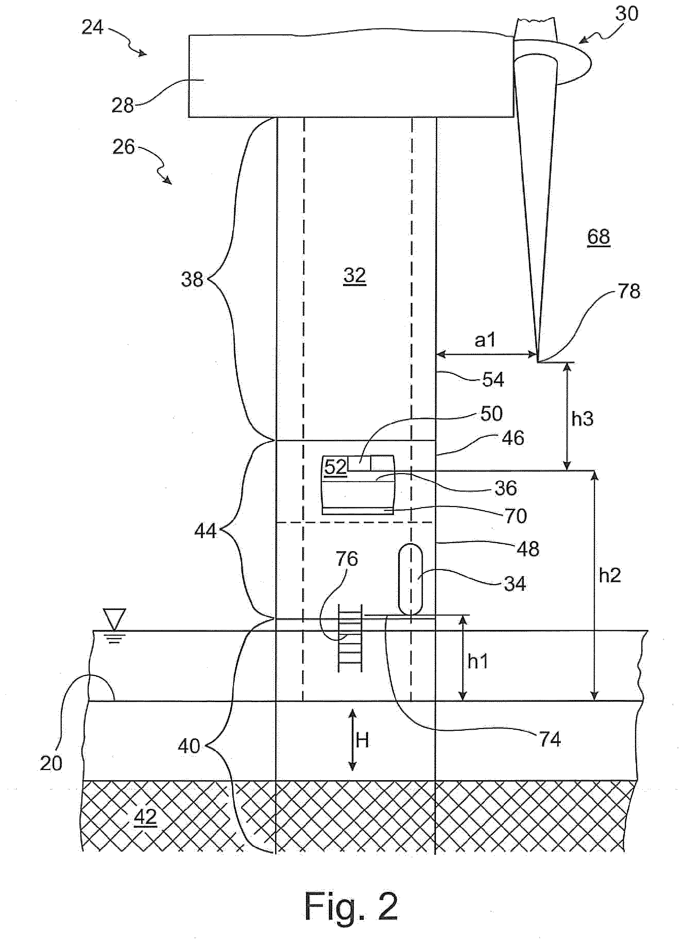

Fig. 2 zeigt eine Offshore-Windenergieanlage 24 mit einer Tragstruktur 26, mit einer Gondel 28, mit einem Rotor 30, und mit einem Innenraum 32. Die Offshore-Windenergieanlage 24 hat eine Zugangsöffnung 34, einen Aufstieg 36, der vorliegend als Treppe ausgebildet ist.

Die Tragstruktur 26 weist einen Turm 38 und eine Gründungsstruktur 40 auf. Der Turm 38 trägt die Gondel 28 und den Rotor 30. Die Zugangsöffnung 34 ist als Personenzugang zu dem Innenraum 32 ausgestaltet. Der Aufstieg 36 ist im Innenraum 32 angeordnet. Der Aufstieg 36 ist der Zugangsöffnung 34 zugeordnet, sodass der Aufstieg 36 ausgehend von der Zugangsöffnung 34 für eine Person begehbar ist.

Entlang der Höhenerstreckung H der Tragstruktur 26 betrachtet ist zwischen der Gründungsstruktur 40 und der Zugangsöffnung 34 keine außenliegende Arbeitsplattform angeordnet. Die Zugangsöffnung 34 ist im fertig montierten Zustand der Offshore-Windenergieanlage 24 entlang der Höhenerstreckung H der Tragstruktur 26 betrachtet 5 m oder weniger oberhalb des niedrigsten Gezeitenwasserstandes 20 angeordnet. Der entlang der Höhenerstreckung H der Tragstruktur 26 gemessene Abstand h1 ist daher vorliegend kleiner als 5 m.

Die Gründungsstruktur 40 dient zur Verankerung der Offshore-Windenergieanlage 24 im Meeresgrund 42, wobei der Meeresgrund 42 vorliegend mit einer Kreuzschraffur dargestellt ist.

Die Offshore-Windenergieanlage 24 hat ein Übergangsstück 44. Das Übergangsstück 44 ist entlang der Höhenerstreckung H der Tragstruktur 26 betrachtet zwischen dem Turm 38 und der Gründungsstruktur 40 angeordnet. Das Übergangsstück 44 verbindet die Gründungsstruktur 40 mit dem Turm 38. Die Zugangsöffnung 34 ist an dem Übergangsstück 44 vorgesehen.

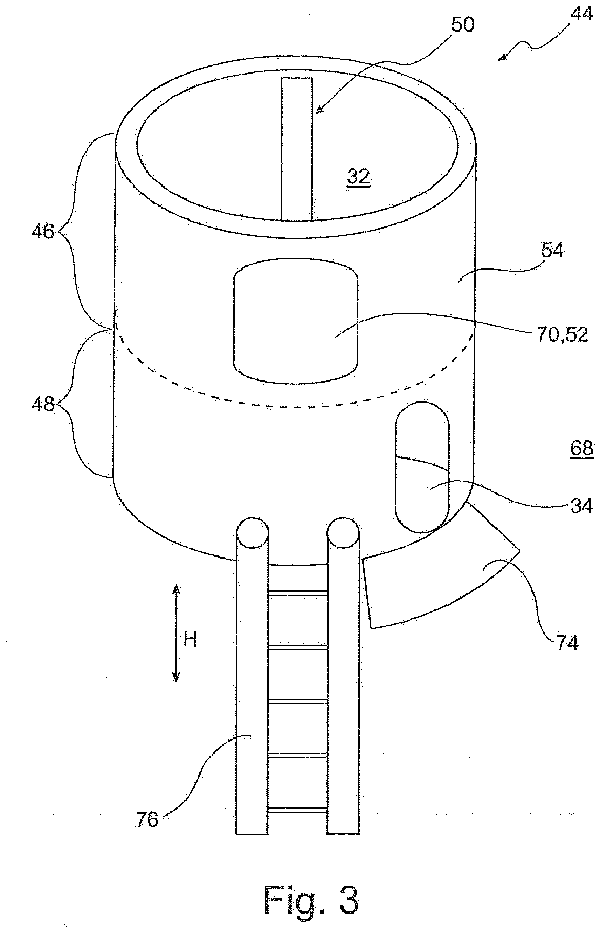

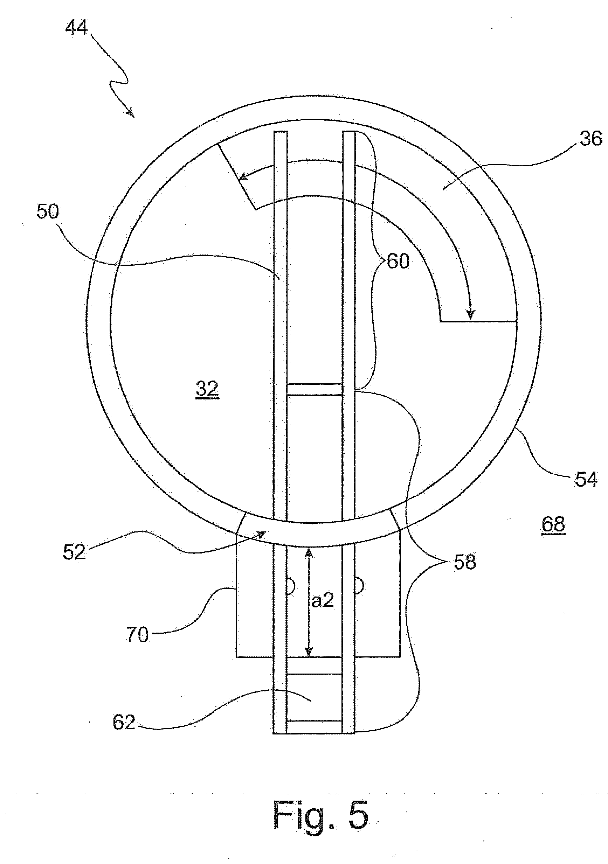

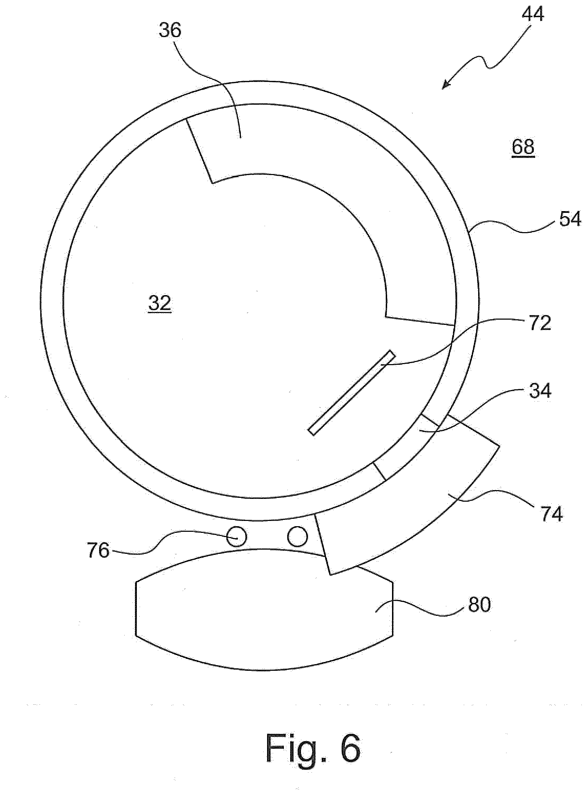

Nachfolgend wird das Übergangsstück 44 gemäß Fig. 2 mit Bezug zu den Figuren 3, 4, 5 und 6 näher beschrieben. Fig. 3 zeigt das Übergangsstück 44 in einer perspektivischen Ansicht von oben. Das Übergangsstück 44 ist aus einem oberen Segment 46 (Fig. 5) und einem unteren Segment 48 (Fig. 6) zusammengesetzt.

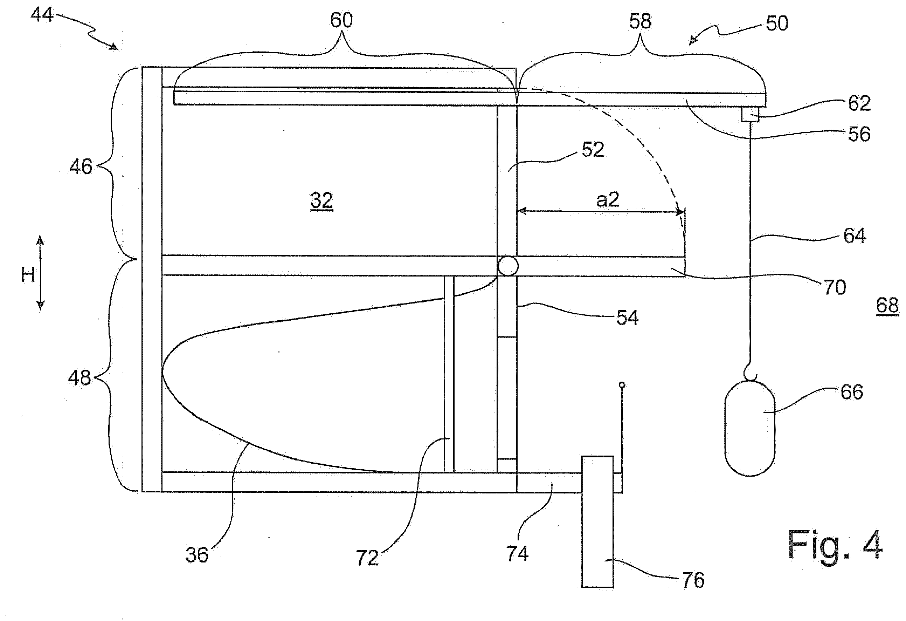

Das Übergangsstück 44 hat eine Hebeeinrichtung 50 und eine Ladeöffnung 52, die an dem oberen Segment 46 des Übergangsstücks 44 vorgesehen sind (Fig. 4). Die Hebeeinrichtung 50 und die Ladeöffnung 52 sind entlang der Höhenerstreckung H betrachtet zwischen der Zugangsöffnung 34 und der Gondel 28 der Offshore-Windenergieanlage 24 angeordnet (Fig. 2). Die Hebeeinrichtung 50 ist der Ladeöffnung 52 zugeordnet, sodass über die Hebeeinrichtung 50 Werkzeuge oder anderes Transportgut, wie beispielsweise sogenannte Big Bags, der Ladeöffnung 52 zugeführt werden können.

Die Hebeeinrichtung 50 ist in einer ersten Position vollständig im Innenraum 32 aufgenommen, wie in Fig. 3 dargestellt. Die Hebeeinrichtung 50 ist in der zweiten Position im Bereich der Ladeöffnung 2 zumindest abschnittsweise über eine äußere Mantelfläche 54 der Tragstruktur 26 auskragend erstreckt.

Die Hebeeinrichtung 50 weist einen Kragbalken auf 56, der aus zwei zueinander verschiebbaren Profilen 58, 60 gebildet ist. Das Profil 58 kann in das Profil 60 eingeschoben werden, sodass das Profil 58 in dem Profil 60 aufgenommen ist.

Die Hebeeinrichtung 50 weist eine Laufkatze 62 auf. Die Laufkatze 62 ist zum Anschlagen eines Hebezeugs 64 vorgesehen. Die Laufkatze 62 umfasst eine Kranwinde, die zum Heben von Lasten 66 vorgesehen ist.

Wie voranstehend bereits dargelegt, ist der Kragbalken 56 aus dem Innenraum 32 ausfahrbar, sodass der Kragbalken 56 über die äußere Mantelfläche 54 der Tragstruktur 26 erstreckt ist. In der zweiten Position (Fig. 4) ragt der Kragbalken 56 daher vom Innenraum 32 in die Umgebung 68.

Entlang der Höhenerstreckung H des Übergangsstück 44 betrachtet ist zwischen der Zugangsöffnung 34 und der Ladeöffnung 52 kein außenliegender Aufstieg, wie eine Leiter, eine Treppe oder dergleichen angeordnet. Die Ladeöffnung 52 ist für Personen daher nur über den Aufstieg 36 erreichbar.

Die Ladeöffnung 52 ist mit einer Klappe 70 verschließbar. Die Klappe 70 ist nach außen zur Umgebung 68 in verschwenkbar an dem Übergangsstück 44 befestigt. Die Klappe 70 ist in einer Offenstellung (Fig. 2, Fig. 4, Fig. 5) über die äußere Mantelfläche 54 der Tragstruktur 26 auskragend angeordnet.

In dem vorliegenden Beispiel ist die Höhe h1 kleiner 5 m. Die Hebeeinrichtung 50 ist im fertig montierten Zustand der Offshore-Windenergieanlage 24 in einer Höhe h2 über dem niedrigsten Gezeitenwasserstand 20 angeordnet, wobei die Höhe h2 kleiner als 10m ist.

Der Zugangsöffnung 34 ist eine Prallplatte 72 zugeordnet. Die Prallplatte 72 ist gegenüber der Zugangsöffnung 34 in den Innenraum 32 zurückversetzt angeordnet. Der Zugangsöffnung 34 ist ein Absatz 74 zugeordnet. Die Zugangsöffnung 34 ist über eine außenliegende Leiter 76 erreichbar. Gemäß weiteren Ausgestaltungen kann vorgesehen sein, dass die Zugangsöffnung 34 mit einer Tür verschlossen ist.

Die Zugangsöffnung 34 ist im fertig montierten Zustand der Offshore-Windenergieanlage 24 entlang der Höhenerstreckung H der Tragstruktur 26 betrachtet ca. 5 m zu einem unteren Durchgang von Rotorspitzen 78 des Rotors 30 beabstandet. Der Abstand h3 beträgt daher ca. 5m.

Entlang der Höhenerstreckung H der Tragstruktur 26 betrachtet ist keine außenliegende Arbeitsplattform in einer Höhe von 10 m oder mehr oberhalb des niedrigsten Gezeitenwasserstands 20 und unterhalb eines unteren Rotordurchgangs 78 des Rotors 30 angeordnet.

Der Abstand a1 zwischen der äußeren Mantelfläche 54 und der Rotorspitze 78 ist größer als die auskragende Länge a2 der Klappe 70.

In Fig. 6 ist weiter ein Serviceboot 80 gezeigt, dass zum Personentransport im Bereich der Leiter 76 positionierbar ist.

### Bezugszeichen

- 2: Offshore-Windenergieanlage
- 4: Tragstruktur
- 6: Gondel
- 8: Rotor
- 10: Innenraum
- 12: Zugangsöffnung
- 14: Aufstieg, Leiter
- 16: Turm
- 18: Gründungsstruktur
- 20: niedrigster Gezeitenwasserstand (LAT; NgzW)
- 22: Unterkante der Zugangsöffnung 12
- 23: Rotorspitze, unterer Durchgang
- 24: Offshore-Windenergieanlage
- 26: Tragstruktur
- 28: Gondel
- 30: Rotor
- 32: Innenraum
- 34: Zugangsöffnung
- 36: Aufstieg, Treppe
- 38: Turm
- 40: Gründungsstruktur
- 42: Meeresgrund
- 44: Übergangsstück
- 46: oberes Segment des Übergangsstücks 44
- 48: unteres Segment des Übergangsstücks 44
- 50: Hebeeinrichtung
- 52: Ladeöffnung
- 54: äußere Mantelfläche des Turms 38
- 56: Kragbalken
- 58: Profil
- 60: Profil
- 62: Laufkatze
- 64: Hebezeug
- 66: Last
- 68: Umgebung
- 70: Klappe, Ladeplattform
- 72: Prallplatte
- 74: Absatz
- 76: Leiter
- 78: Rotorspitze, unterer Durchgang
- 80: Serviceboot
- H: Höhenerstreckung
- h1: Abstand
- d1: Abstand
- h2: Abstand
- h3: Abstand
- a1: Abstand
- a2: auskragende Länge

## Patentansprüche

1. Offshore-Windenergieanlage,
- mit einer Tragstruktur (4, 26),
- mit einer Gondel (6, 28),
- mit einem Rotor (8, 30),
- mit einem Innenraum (10, 32),
- mit wenigstens einer Zugangsöffnung (12, 34) und
- mit einem Aufstieg (14, 36), wie einer Leiter, einer Treppe oder dergleichen,
- wobei die Tragstruktur (4, 26) einen Turm und eine Gründungsstruktur (18, 40) aufweist,
- wobei der Turm die Gondel (6, 28) und den Rotor (8, 30) trägt,
- wobei die Zugangsöffnung (12, 34) als Personenzugang zu dem Innenraum (10, 32) ausgestaltet ist,
- wobei der Aufstieg (14, 36) im Innenraum (10, 32) angeordnet ist,
- wobei der Aufstieg (14, 36) der Zugangsöffnung (12, 34) zugeordnet ist und
- wobei entlang einer Höhenerstreckung (H) der Tragstruktur (4, 26) betrachtet zwischen der Gründungsstruktur (18, 40) und der Zugangsöffnung (12, 34) keine außenliegende Arbeitsplattform angeordnet ist, **dadurch gekennzeichnet, dass** die Offshore-Windenergieanlage eine Hebeeinrichtung (50) und eine Ladeöffnung (52) aufweist, wobei die Hebeeinrichtung (50) und die Ladeöffnung (52) entlang der Höhenerstreckung (H) betrachtet zwischen der Zugangsöffnung (34) und der Gondel (28) angeordnet sind,
- wobei die Hebeeinrichtung der Ladeöffnung zugeordnet ist, wobei die Hebeeinrichtung aus einer ersten in eine zweite Position bewegbar ist, und
- wobei die Hebeeinrichtung (50) in der ersten Position vollständig im Innenraum (32) aufgenommen ist.

2. Offshore-Windenergieanlage nach Anspruch 1,
- wobei die Hebeeinrichtung (50) in der zweiten Position im Bereich der Ladeöffnung (52) zumindest abschnittsweise über eine äußere Mantelfläche (54) der Tragstruktur (26) auskragend erstreckt ist.

3. Offshore-Windenergieanlage nach Anspruch 2,
- wobei entlang der Höhenerstreckung (H) der Tragstruktur (4, 26) betrachtet zwischen der Zugangsöffnung (34) und der Ladeöffnung (52) kein außenliegender Aufstieg, wie eine Leiter, eine Treppe oder dergleichen, angeordnet ist.

4. Offshore-Windenergieanlage nach einem der Ansprüche 2 oder 3,
- wobei die Hebeeinrichtung (50) eine Laufkatze (62) und einen Kragbalken (56) aufweist,
- wobei die Laufkatze (62) insbesondere zum Anschlagen eines Hebezeugs (64) und/oder von Lasten (66) vorgesehen und entlang des Kragbalkens (56) verschiebbar ist, und
- wobei der Kragbalken (56) insbesondere zumindest abschnittsweise aus dem Innenraum (32) bewegbar ist, sodass der Kragbalken (56) zumindest abschnittsweise über eine äußere Mantelfläche (54) der Tragstruktur (26) auskragend erstreckt ist.

5. Offshore-Windenergieanlage nach einem der voranstehenden Ansprüche 2 bis 4,
- wobei die Ladeöffnung (52) mit einer Klappe (70) verschließbar ist und
- wobei die Klappe (70) insbesondere nach außen verschwenkbar an der Tragstruktur (26) befestigt ist, sodass die Klappe (70) in einer Offenstellung eine über eine äußere Mantelfläche (54) der Tragstruktur (26) auskragende Ladeplattform (70) bildet.

6. Offshore-Windenergieanlage nach einem der voranstehenden Ansprüche 2 bis 5,
- wobei die Hebeeinrichtung (50) im fertig montierten Zustand der Offshore-Windenergieanlage entlang der Höhenerstreckung (H) der Tragstruktur (26) betrachtet in einer Höhe von 5 m bis 10 m über dem niedrigsten Gezeitenwasserstand (20) angeordnet ist.

7. Offshore-Windenergieanlage nach einem der voranstehenden Ansprüche,
- wobei der Zugangsöffnung (12, 34) eine gegenüber der Zugangsöffnung (12, 34) in den Innenraum (10, 32) nach innen zurück versetzte Prallplatte (72) zugeordnet ist.
und/oder
- wobei der Zugangsöffnung (12, 34) ein Absatz zugeordnet ist, der über eine außenliegende Leiter erreichbar ist
und/oder
- wobei eine Tür zum Öffnen und Verschließen der Zugangsöffnung (12, 34) vorgesehen ist.

8. Offshore-Windenergieanlage nach einem der voranstehenden Ansprüche,
- wobei die Zugangsöffnung (12, 34) im fertig montierten Zustand der Offshore-Windenergieanlage (2, 24) entlang der Höhenerstreckung (H) der Tragstruktur (4, 26) betrachtet 15 m oder weniger oberhalb des niedrigsten Gezeitenwasserstand (20) angeordnet ist
und/oder
- wobei der Aufstieg (14, 36) im fertig montierten Zustand der Offshore-Windenergieanlage (2, 24) entlang der Höhenerstreckung (H) der Tragstruktur (4, 26) betrachtet zumindest abschnittsweise 15 m oder weniger oberhalb des niedrigsten Gezeitenwasserstands (20) angeordnet ist
und/oder
- wobei die Zugangsöffnung (12, 34) im fertig montierten Zustand der Offshore-Windenergieanlage (2, 24) entlang der Höhenerstreckung (H) der Tragstruktur (4, 26) betrachtet 5 m oder mehr zu einem unteren Durchgang (23, 78) von Rotorspitzen des Rotors (8, 30) beabstandet ist
und/oder
- wobei im fertig montierten Zustand der Offshore-Windenergieanlage (2, 24) entlang der Höhenerstreckung (H) der Tragstruktur (4, 26) betrachtet keine außenliegende Arbeitsplattform in einer Höhe von 15 m oder mehr, insbesondere 10 m oder mehr, oberhalb des niedrigsten Gezeitenwasserstands (20) und unterhalb eines unteren Rotordurchgangs des Rotors (8, 30) angeordnet ist.

9. Offshore-Windenergieanlage nach Anspruch 8,
- wobei die Zugangsöffnung (12, 34) im fertig montierten Zustand der Offshore-Windenergieanlage (2, 24) entlang der Höhenerstreckung (H) der Tragstruktur (4, 26) betrachtet 10 m oder weniger oberhalb des niedrigsten Gezeitenwasserstand (20) angeordnet ist, insbesondere 5 m oder weniger oberhalb des niedrigsten Gezeitenwasserstand (20) angeordnet ist
und/oder
- wobei der Aufstieg (14, 36) im fertig montierten Zustand der Offshore-Windenergieanlage (2, 24) entlang der Höhenerstreckung (H) der Tragstruktur (4, 26) betrachtet zumindest abschnittsweise 10 m oder weniger oberhalb des niedrigsten Gezeitenwasserstands (20) angeordnet ist, insbesondere 5 m oder weniger oberhalb des niedrigsten Gezeitenwasserstand (20) angeordnet ist
und/oder
- wobei die Zugangsöffnung (12, 34) im fertig montierten Zustand der Offshore-Windenergieanlage (2, 24) entlang der Höhenerstreckung (H) der Tragstruktur (4, 26) betrachtet 10 m oder mehr zu einem unteren Durchgang von Rotorspitzen des Rotors (8, 30) beabstandet ist, insbesondere 15 m oder mehr zu einem unteren Durchgang (23, 78) von Rotorspitzen des Rotors (8, 30) beabstandet ist.

10. Offshore-Windenergieanlage nach einem der voranstehenden Ansprüche,
- wobei die Tragstruktur (4, 26) ein Übergangsstück aufweist,
- wobei das Übergangsstück entlang der Höhenerstreckung (H) der Tragstruktur (4, 26) betrachtet zwischen dem Turm und der Gründungsstruktur (18, 40) angeordnet ist,
- wobei das Übergangsstück die Gründungsstruktur (18, 40) mit dem Turm verbindet und
- wobei die Zugangsöffnung (12, 34) an dem Übergangsstück vorgesehen ist.

## Claims

1. An offshore wind turbine,
- having a supporting structure (4, 26),
- having a nacelle (6, 28),
- having a rotor (8, 30),
- having an interior space (10, 32),
- having at least one access opening (12, 34), and
- having a means of ascent (14, 36), such as a ladder, a staircase or the like,
- wherein the supporting structure (4, 26) has a tower and a foundation structure (18, 40),
- wherein the tower supports the nacelle (6, 28) and the rotor (8, 30),
- wherein the access opening (12, 34) is an access for people to the interior space (10, 32),
- wherein the means of ascent (14, 36) is arranged in the interior space (10, 32),
- wherein the means of ascent (14, 36) is assigned to the access opening (12, 34), and
- wherein no external work platform is arranged between the foundation structure (18, 40) and the access opening (12, 34), as viewed along a vertical extent (H) of the supporting structure (4, 26), **characterized in that**
the offshore wind turbine comprises a lifting device (50) and loading opening (52) wherein the lifting device (50) and the loading opening (52) are arranged between the access opening (34) and the nacelle (28), as viewed along the vertical extent (H)
- wherein the lifting device is assigned to the loading opening, wherein the lifting device is movable from a first into a second position, and
- wherein, in the first position, the lifting device (50) is completely accommodated in the interior space (32).

2. The offshore wind turbine as claimed in claim 1,
wherein, in the second position, the lifting device (50) is extended in the region of the loading opening (52) so as to project at least in sections over an outer circumferential surface (54) of the supporting structure (26).

3. The offshore wind turbine as claimed in claim 2,
- wherein no external means of ascent, such as a ladder, a staircase or the like, is arranged between the access opening (34) and the loading opening (52), as viewed along the vertical extent (H) of the supporting structure (4, 26).

4. The offshore wind turbine as claimed in either of claims 2 and 3,
- wherein the lifting device (50) has a trolley (62) and a cantilever (56),
- wherein the trolley (62) is provided for the mounting of a hoist (64) or of loads (66) and is displaceable along the cantilever (56), and
- wherein the cantilever (56) is movable at least in sections out of the interior space (32), and therefore the cantilever (56) is extended so as to project at least in sections over an outer circumferential surface (54) of the supporting structure (26).

5. The offshore wind turbine as claimed in one of the preceding claims 2-4,
- wherein the loading opening (52) is closable with a flap (70), and
- wherein the flap (70) is fastened to the supporting structure so as to be pivotable outward, and therefore the flap (70) in an open position forms a loading platform (70) projecting over an outer circumferential surface (54) of the supporting structure (26).

6. The offshore wind turbine as claimed in one of the preceding claims 2-5,
- wherein, in the completely assembled state of the offshore wind turbine, the lifting device (50) is arranged at a height of 5 m to 10 m above the lowest tidal water level (20), as viewed along the vertical extent (H) of the supporting structure (26).

7. The offshore wind turbine as claimed in one of the preceding claims,
- wherein the access opening (12, 34) is assigned a baffle plate (72) which is set back inward in relation to the access opening (12, 34) into the interior space, and/or
- wherein the access opening (12, 34) is assigned a ledge which can be reached via an exterior ladder, and/or
- wherein a door for opening and closing the access opening (12, 34) is provided.

8. The offshore wind turbine as claimed in one of the preceding claims,
- wherein, in the completely assembled state of the offshore wind turbine (2, 24), the access opening (12, 34) is arranged 15 m or less above the lowest tidal water level (20), as viewed along the vertical extent (H) of the supporting structure (4, 26),
and/or
- wherein, in the completely assembled state of the offshore wind turbine (2, 24), the means of ascent (14, 36) is arranged at least in sections 15 m or less above the lowest tidal water level (20), as viewed along the vertical extent (H) of the supporting structure (4, 26),
and/or
- wherein, in the completely assembled state of the offshore wind turbine (2, 24), the access opening (12, 34) is spaced apart 5 m or more from a lower passage (23, 78) of rotor tips of the rotor (8, 30), as viewed along the vertical extent (H) of the supporting structure (4, 26),
and/or
- wherein, in the completely assembled state of the offshore wind turbine (2, 24), no external work platform is arranged at a height of 15 m or more, in particular 10 m or more, above the lowest tidal water level (20) and below a lower rotor passage of the rotor (8, 30), as viewed along the vertical extent (H) of the supporting structure (4, 26).

9. The offshore wind turbine as claimed in claim 8,
- wherein, in the completely assembled state of the offshore wind turbine (2, 24), the access opening (12, 34) is arranged 10 m or less above the lowest tidal water level (20), in particular 5 m or less, above the lowest tidal water level (20), as viewed along the vertical extent (H) of the supporting structure (4, 26),
and/or
- wherein, in the completely assembled state of the offshore wind turbine (2, 24), the means of ascent (14, 36) is arranged at least in sections 10 m or less above the lowest tidal water level (20), in particular 5 m or less, above the lowest tidal water level (20), as viewed along the vertical extent (H) of the supporting structure (4, 26),
and/or
- wherein, in the completely assembled state of the offshore wind turbine (2, 24), the access opening (12, 34) is spaced apart 10 m or more from a lower passage of rotor tips of the rotor (8, 30), in particular 15 m or more from a lower passage (23, 78) of rotor tips of the rotor (8, 30), as viewed along the vertical extent (H) of the supporting structure (4, 26).

10. The offshore wind turbine as claimed in one of the preceding claims 1 to 3,
- wherein the supporting structure (4, 26) has a transition piece (44),
- wherein the transition piece (44) is arranged between the tower and the foundation structure (18, 40), as viewed along the vertical extent (H) of the supporting structure (4, 26) ,
- wherein the transition piece (44) connects the foundation structure (18, 40) to the tower, and
- wherein the access opening (12, 34) is provided on the transition piece (44).

## Revendications

1. Éolienne en mer,
- comportant une structure porteuse (4, 26),
- comportant une nacelle (6, 28),
- comportant un rotor (8, 30),
- comportant un espace intérieur (10, 32),
- comportant au moins une ouverture d'accès (12, 34) et
- comportant un dispositif de montée (14, 36), tel qu'une échelle, un escalier ou similaire,
- dans laquelle la structure porteuse (4, 26) comprend une tour et une structure de fondation (18, 40),
- dans laquelle la tour soutient la nacelle (6, 28) et le rotor (8, 30),
- dans laquelle l'ouverture d'accès (12, 34) est réalisée sous la forme d'un accès pour des personnes à l'espace intérieur (10, 32),
- dans laquelle le dispositif de montée (14, 36) est disposé dans l'espace intérieur (10, 32),
- dans laquelle le dispositif de montée (14, 36) est associé à l'ouverture d'accès (12, 34), et
- dans laquelle aucune plate-forme de travail extérieure n'est disposée entre la structure de fondation (18, 40) et l'ouverture d'accès (12, 34) suivant une extension en hauteur (H) de la structure porteuse (4, 26), **caractérisée en ce que** l'éolienne en mer comprend un moyen de levage (50) et une ouverture de chargement (52), le moyen de levage (50) et l'ouverture de chargement (52) étant disposés entre l'ouverture d'accès (34) et la nacelle (28) suivant l'extension en hauteur (H),
- dans laquelle le moyen de levage est associé à l'ouverture de chargement, le moyen de levage étant déplaçable d'une première à une seconde position, et
- dans laquelle le moyen de levage (50) dans la première position est entièrement reçu dans l'espace intérieur (32).

2. Éolienne en mer selon la revendication 1,
- dans laquelle le moyen de levage (50) dans la seconde position dans la zone de l'ouverture de chargement (52) s'étend en porte-à-faux, au moins dans certaines régions, sur une surface latérale extérieure (54) de la structure porteuse (26).

3. Éolienne en mer selon la revendication 2, dans laquelle
- aucun dispositif de montée extérieur, tel qu'une échelle, un escalier ou similaire, n'est disposé entre l'ouverture d'accès (34) et l'ouverture de chargement (52) suivant l'extension en hauteur (H) de la structure porteuse (4, 26).

4. Éolienne en mer selon l'une des revendications 2 ou 3,
- dans laquelle le moyen de levage (50) comprend un chariot roulant (62) et une poutre en porte-à-faux (56),
- dans laquelle le chariot roulant (62) est prévu en particulier pour la fixation d'un palan (64) et/ou de charges (66) et est déplaçable le long de la poutre en porte-à-faux (56), et
- dans laquelle la poutre en porte-à-faux (56) peut être déplacée, en particulier au moins dans certaines régions, hors de l'espace intérieur (32), de sorte que la poutre en porte-à-faux (56) s'étend en porte-à-faux au moins dans certaines régions, sur une surface latérale extérieure (54) de la structure porteuse (26).

5. Éolienne en mer selon l'une des revendications 2 à 4 précédentes,
- dans laquelle l'ouverture de chargement (52) peut être fermée par un clapet (70), et
- dans laquelle le clapet (70) est fixé à la structure porteuse (26) en particulier de manière à pouvoir pivoter vers l'extérieur, de sorte que le clapet (70) forme, dans une position ouverte, une plate-forme de chargement (70) en porte-à-faux au-dessus d'une surface latérale extérieure (54) de la structure porteuse (26).

6. Éolienne en mer selon l'une des revendications 2 à 5 précédentes,
- dans laquelle le moyen de levage (50), à l'état entièrement assemblé de l'éolienne en mer, est disposé suivant l'extension en hauteur (H) de la structure porteuse (26) à une hauteur de 5 à 10 m au-dessus du niveau le plus bas (20) de l'eau de marée.

7. Éolienne en mer selon l'une des revendications précédentes,
- dans laquelle une plaque déflectrice (72) est associée à l'ouverture d'accès (12, 34), laquelle plaque déflectrice est décalée vers l'intérieur dans l'espace intérieur (10, 32) par rapport à l'ouverture d'accès (12, 34).
et/ou
- dans laquelle l'ouverture d'accès (12, 34) est associée à une marche accessible par une échelle extérieure
et/ou
- dans laquelle une porte est prévue pour ouvrir et fermer l'ouverture d'accès (12, 34).

8. Éolienne en mer selon l'une des revendications précédentes,
- dans laquelle l'ouverture d'accès (12, 34), à l'état entièrement assemblé de l'éolienne en mer (2, 24), est disposée suivant l'extension en hauteur (H) de la structure porteuse (4, 26) à au plus 15 m au-dessus du niveau le plus bas (20) de l'eau de marée et/ou
- dans laquelle le dispositif de montée (14, 36), à l'état entièrement assemblé de l'éolienne en mer (2, 24), est disposé suivant l'extension en hauteur (H) de la structure porteuse (4, 26), au moins dans certaines régions, à au plus 15 m au-dessus du niveau le plus bas (20) de l'eau de marée
et/ou
- dans laquelle l'ouverture d'accès (12, 34), à l'état entièrement assemblé de l'éolienne en mer (2, 24), est espacée d'au moins 5 m suivant l'extension en hauteur (H) de la structure porteuse (4, 26) par rapport à un passage inférieur (23, 78) des extrémités du rotor (8, 30)
et/ou
- dans laquelle, à l'état entièrement assemblé de l'éolienne en mer (2, 24), suivant l'extension en hauteur (H) de la structure porteuse (4, 26), aucune plate-forme de travail extérieure n'est disposée à une hauteur d'au moins 15 m, en particulier d'au moins 10 m, au-dessus du niveau le plus bas (20) de l'eau de marée et au-dessous d'un passage inférieur du rotor (8, 30).

9. Éolienne en mer selon la revendication 8,
- dans laquelle l'ouverture d'accès (12, 34), à l'état entièrement assemblé de l'éolienne en mer (2, 24), est disposée à au plus 10 m au-dessus du niveau le plus bas (20) de l'eau de marée suivant l'extension en hauteur (H) de la structure porteuse (4, 26), en particulier est disposée à au plus 5 m au-dessus du niveau le plus bas (20) de l'eau de marée et/ou
- dans laquelle le dispositif de montée (14, 36), à l'état entièrement assemblé de l'éolienne en mer (2, 24), est disposé suivant l'extension en hauteur (H) de la structure porteuse (4, 26), au moins dans certaines régions, à au plus 10 m au-dessus du niveau le plus bas (20) de l'eau de marée, en particulier est disposé à au plus 5 m au-dessus du niveau le plus bas (20) de l'eau de marée
et/ou
- dans laquelle l'ouverture d'accès (12, 34), à l'état entièrement assemblé de l'éolienne en mer (2, 24), est espacée d'au moins 10 m d'un passage inférieur des extrémités du rotor (8, 30), en particulier d'au moins 15 m d'un passage inférieur (23, 78) des extrémités du rotor (8, 30) suivant l'extension en hauteur (H) de la structure porteuse (4, 26).

10. Éolienne en mer selon l'une des revendications précédentes,
- dans laquelle la structure porteuse (4, 26) comprend une pièce de transition,
- dans laquelle la pièce de transition est disposée entre la tour et la structure de fondation (18, 40) suivant l'extension en hauteur (H) de la structure porteuse (4, 26),
- dans laquelle la pièce de transition relie la structure de fondation (18, 40) à la tour, et
- dans laquelle l'ouverture d'accès (12, 34) est prévue au niveau de la pièce de transition.
